# EUROPEAN PATENT APPLICATION

(11) **EP 4 671 981 A1**
(43) Date of publication of application: **31.12.2025**
(21) Application number: 24773876.8
(22) Date of filing: 29.02.2024
(51) Int. Cl.: G06F 9/48

(54) **INTERRUPT PROCESSING METHOD AND APPARATUS, AND ELECTRONIC DEVICE**

(30) Priority: 21.03.2023 CN 202310304586
(71) Applicant: Huawei Technologies Co., Ltd., Shenzhen, Guangdong 518129 (CN)
(72) Inventor: CAO, Shen, Shenzhen, Guangdong 518129 (CN); LIU, Yutao, Shenzhen, Guangdong 518129 (CN); WU, Yuming, Shenzhen, Guangdong 518129 (CN); DAI, Jie, Shenzhen, Guangdong 518129 (CN); XU, Aoxiang, Shenzhen, Guangdong 518129 (CN); ZHU, Lichun, Shenzhen, Guangdong 518129 (CN); HU, Xiameng, Shenzhen, Guangdong 518129 (CN); MALLORY, Adam, Shenzhen, Guangdong 518129 (CN)
(74) Representative: Epping - Hermann - Fischer
(86) International application number: PCT/CN2024/079197
(87) International publication number: WO 2024/193308

(57) **Abstract**

Embodiments of this application provide an interrupt processing method and apparatus, and an electronic device. The method includes: when a first interrupt request is triggered, determining a target CPU that responds to the first interrupt request; determining a first target interrupt running entity in the target CPU; scheduling a target thread from a user mode to a kernel mode; replacing a running entity in the target thread with the first target interrupt running entity; and scheduling the target thread including the first target interrupt running entity to the user mode, and running the first target interrupt running entity by using the target CPU. According to the technical method, an interrupt running entity replaces a common running entity. Because the interrupt running entity includes less content, an interrupt response speed can be improved. In addition, an electronic device may sense interrupt running by using the interrupt running entity, to avoid an operation such as preemption or core switching performed on an interrupt processing thread due to interruption or scheduling during interrupt running, thereby ensuring real-time performance of the interrupt.

## Description

This application claims priority to Chinese Patent Application No. 202310304586.X, filed with the China National Intellectual Property Administration on March 21, 2023 and entitled "INTERRUPT PROCESSING METHOD AND APPARATUS, AND ELECTRONIC DEVICE", which is incorporated herein by reference in its entirety.

### TECHNICAL FIELD

Embodiments of this application relate to the field of operating systems, and more specifically, to an interrupt processing method and apparatus, and an electronic device.

### BACKGROUND

In consideration of factors such as security, maintainability, and service flexibility in an operating system (for example, Linux), more operating systems run interrupts in a user mode, and a user mode interrupt becomes a development trend in the future. For example, the interrupt needs to be processed during running of a driver. Therefore, a user mode driver also needs to perform processing in the user mode. Real-time performance of processing the user mode interrupt directly affects performance of the driver.

How to ensure real-time performance of processing the interrupt becomes a technical problem that needs to be resolved.

### SUMMARY

Embodiments of this application provide an interrupt processing method and apparatus, and an electronic device. In the technical solution, an interrupt running entity may replace a common running entity. Because the interrupt running entity includes less content, an interrupt response speed can be improved. In addition, an electronic device may sense interrupt running by using the interrupt running entity, to avoid an operation such as preemption or core switching performed on an interrupt processing thread due to interruption or scheduling during interrupt running, thereby ensuring real-time performance of the interrupt.

According to a first aspect, an interrupt processing method is provided. The method is applied to an electronic device, and the method includes: When a first interrupt request is triggered, the electronic device determines a target central processing unit CPU that responds to the first interrupt request. The electronic device determines a first target interrupt running entity in the target CPU. The electronic device schedules a target thread from a user mode to a kernel mode. The electronic device replaces a running entity in the target thread with the first target interrupt running entity. The electronic device schedules the target thread including the first target interrupt running entity to the user mode, and runs the first target interrupt running entity by using the target CPU.

It may be understood that the electronic device may include a plurality of CPUs, and the target CPU may be one of the plurality of CPUs. The first interrupt request may be configured to be capable of being responded to by the plurality of CPUs.

The target thread may be a thread that is running in the user mode.

In this embodiment of this application, when the interrupt request is triggered, the electronic device may determine the target CPU that responds to the first interrupt request; determine the first target interrupt running entity in the target CPU, and then preempt the target thread that is running in the user mode to enter the kernel mode; replace the running entity in the target thread with the first target interrupt running entity; and then schedule the target thread to the user mode, and run the first target interrupt running entity in the target CPU.

In this way, in an interrupt processing process, an interrupt running entity replaces a common running entity. Because the interrupt running entity includes less content, an interrupt response speed can be improved. Further, the electronic device may sense interrupt running by using the interrupt running entity, to avoid an operation such as preemption or core switching performed on an interrupt processing thread due to interruption or scheduling during interrupt running, thereby ensuring real-time performance the interrupt.

With reference to the first aspect, in an implementation of the first aspect, that the electronic device determines a first target interrupt running entity in the target CPU includes: determining the first target interrupt running entity in the target CPU based on a priority of the first interrupt request.

In this embodiment of this application, different interrupt requests may have different priorities. The electronic device may determine an interrupt running entity in the target CPU based on a priority of an interrupt request. A priority of the interrupt running entity corresponds to the priority of the interrupt request. In this way, it can be ensured that interrupt requests with different priorities correspond to different target interrupt running entities, so that a current interrupt during running can be prevented from being interrupted by another interrupt with a same priority or a low priority, thereby ensuring real-time performance of interrupt processing.

In some other examples, the electronic device may alternatively determine the first target interrupt running entity in the target CPU in another manner. This is not limited in this embodiment of this application.

With reference to the first aspect, in an implementation of the first aspect, the method further includes: The electronic device creates an interrupt running entity resource pool for the target CPU. The interrupt running entity resource pool includes a plurality of interrupt running entities, and the plurality of interrupt running entities have different priorities. That the electronic device determines the first target interrupt running entity in the target CPU based on a priority of the first interrupt request includes: The electronic device determines the first target interrupt running entity from the interrupt running entity resource pool based on the priority of the first interrupt request.

In this embodiment of this application, the electronic device may create an interrupt running entity resource pool for each CPU. The interrupt running entity resource pool may include a plurality of interrupt running entities with different priorities, so that the electronic device can determine a corresponding interrupt running entity from the interrupt running entity resource pool based on the priority of the interrupt request.

In this way, each interrupt request has an interrupt running entity with a corresponding priority, so that a current interrupt during running can be prevented from being interrupted by another interrupt with a same priority or a low priority, thereby ensuring real-time performance of interrupt processing.

With reference to the first aspect, in an implementation of the first aspect, before the electronic device replaces the running entity in the target thread with the first target interrupt running entity, the method further includes: The electronic device stores the running entity in the target thread.

In this embodiment of this application, the electronic device may store the running entity in the target thread, and does not need to store a scheduling entity in the target thread, so that an interrupt processing speed can be faster, and after interrupt processing is completed, the target thread can quickly return to the user mode.

With reference to the first aspect, in an implementation of the first aspect, in a process in which the target CPU runs the first target interrupt running entity, the method further includes: When a second interrupt request is triggered, the electronic device determines that a CPU that responds to the second interrupt request is the target CPU. A priority of the second interrupt request is higher than the priority of the first interrupt request. The electronic device determines a second target interrupt running entity in the target CPU based on the priority of the second interrupt request. A priority of the second target interrupt running entity is higher than a priority of the first target interrupt running entity. The electronic device schedules the target thread from the user mode to the kernel mode. The electronic device replaces the first target interrupt running entity in the target thread with the second target interrupt running entity. The electronic device schedules the target thread including the second target interrupt running entity to the user mode, and runs the second target interrupt running entity by using the target CPU.

In this embodiment of this application, in the process in which the target CPU runs the first target interrupt running entity, the electronic device further triggers the second interrupt request with a higher priority. The CPU that responds to the second interrupt request is also the target CPU. In this case, the electronic device may determine the second target interrupt running entity in the target CPU based on the priority of the second interrupt request, schedule the target thread from the user mode to the kernel mode, and replace the first target interrupt running entity in the target thread with the second target interrupt running entity. Then, the electronic device schedules the target thread including the second target interrupt running entity to the user mode, and runs the second target interrupt running entity by using the target CPU.

In the technical solution, an interrupt running entity with a high priority may be used to preempt an interrupt running entity with a low priority, to ensure that an interrupt with a high priority can be preferentially processed.

In some other examples, in the process in which the target CPU runs the first target interrupt running entity, if the electronic device receives another interrupt request whose priority is less than or equal to that of the first interrupt request, the electronic device may continue to process the another interrupt after completing processing of the first interrupt request. In this way, the current interrupt is prevented from being interrupted by another interrupt with a same priority or a low priority.

With reference to the first aspect, in an implementation of the first aspect, before the electronic device replaces the first target interrupt running entity in the target thread with the second target interrupt running entity, the method further includes: The electronic device stores the first target interrupt running entity.

In this embodiment of this application, before the electronic device replaces the first target interrupt running entity in the target thread with the second target interrupt running entity, the electronic device may store the first target interrupt running entity, and does not need to store the scheduling entity, to quickly return to the user mode when the first target interrupt running entity is subsequently run.

With reference to the first aspect, in an implementation of the first aspect, after running of the second target interrupt running entity is completed, the method further includes: The electronic device schedules the target thread to the kernel mode. The electronic device replaces the second target interrupt running entity with the first target interrupt running entity. The electronic device schedules the target thread including the first target interrupt running entity to the user mode, and continues to run the first target interrupt running entity by using the target CPU.

In this embodiment of this application, after running of the second target interrupt running entity with a high priority is completed, the electronic device may continue to run the first target interrupt running entity. This helps ensure that an interrupt with a high priority can be processed in a timely manner.

With reference to the first aspect, in an implementation of the first aspect, after running of the first target interrupt running entity is completed, the method further includes: The electronic device schedules the target thread to the kernel mode. The electronic device replaces the first target interrupt running entity with the running entity. The electronic device schedules the target thread including the running entity to the user mode, and continues to run the running entity by using the target CPU.

In this embodiment of this application, after running of the first target interrupt running entity is completed, the electronic device may schedule the target thread to the kernel mode, replace the first target interrupt running entity with an original running entity in the target thread, and return the target thread to the user mode for running, so that the target thread continues to execute an original task of the target thread.

With reference to the first aspect, in an implementation of the first aspect, the electronic device includes a plurality of CPUs, and that the electronic device determines a target CPU that responds to the first interrupt request includes: The electronic device determines, based on interrupt load sizes of the plurality of CPUs, the target CPU that responds to the first interrupt request. The first interrupt request is configured to be capable of being responded to by the target CPU.

In this embodiment of this application, the electronic device may include a plurality of CPUs, and the first interrupt request may also be configured to be capable of being responded to by the plurality of CPUs. In this case, the electronic device may determine, based on the interrupt load sizes of the plurality of CPUs, the target CPU that responds.

With reference to the first aspect, in an implementation of the first aspect, that the electronic device determines, based on interrupt load sizes of the CPUs, the target CPU that responds to the first interrupt request includes: The electronic device uses a CPU with a lower interrupt load as the target CPU that responds to the first interrupt request.

In this embodiment of this application, the electronic device may use a CPU with a lower interrupt load as a target CPU that responds to an interrupt request, thereby ensuring that an interrupt can be processed in a timely manner.

With reference to the first aspect, in an implementation of the first aspect, that the electronic device determines a target CPU that responds to the first interrupt request includes: The electronic device receives indication information sent by a CPU. The indication information indicates that the CPU is incapable of processing an interrupt. The electronic device determines the target CPU from a CPU that is capable of responding to the first interrupt request and that is other than the CPU that sends the indication information.

In this embodiment of this application, when an overall load of a CPU is high, the CPU may actively send indication information to the electronic device, to indicate that the CPU cannot process a new interrupt. In this case, the electronic device may determine, from other CPUs, the target CPU that responds to the first interrupt request. This helps ensure that an interrupt can be processed in a timely manner.

With reference to the first aspect, in an implementation of the first aspect, the first target interrupt running entity includes at least information that is related to interrupt running and that indicates an address space, and information about a general-purpose register including an interrupt number corresponding to the first interrupt request and a status register.

In this embodiment of this application, the first target interrupt running entity includes less content than a common running entity, to improve a speed of responding to the first interrupt request.

With reference to the first aspect, in an implementation of the first aspect, the second target interrupt running entity includes at least information that is related to interrupt running and that indicates an address space, and information about a general-purpose register including an interrupt number corresponding to the second interrupt request and a status register.

In this embodiment of this application, the second target interrupt running entity includes less content than a common running entity, to improve a speed of responding to the second interrupt request.

According to a second aspect, an electronic device is provided, including one or more processors and one or more memories. The one or more memories store one or more programs, and when the one or more programs are executed by the one or more processors, the interrupt processing method according to any one of the first aspect and the possible implementation of the first aspect is performed.

According to a third aspect, an interrupt processing apparatus is provided, including: a processing module, configured to: when a first interrupt request is triggered, determine a target central processing unit CPU that responds to the first interrupt request; determine the first target interrupt running entity in the target CPU based on a priority of the first interrupt request; schedule a target thread from a user mode to a kernel mode; replace a running entity in the target thread with the first target interrupt running entity; and schedule the target thread including the first target interrupt running entity to the user mode, and run the first target interrupt running entity by using the target CPU.

With reference to the third aspect, in an implementation of the third aspect, the processing module is specifically configured to determine the first target interrupt running entity in the target CPU based on the priority of the first interrupt request.

With reference to the third aspect, in an implementation of the third aspect, the processing module is further configured to create an interrupt running entity resource pool for the target CPU. The interrupt running entity resource pool includes a plurality of interrupt running entities, and the plurality of interrupt running entities have different priorities. The processing module is specifically configured to determine the first target interrupt running entity from the interrupt running entity resource pool based on the priority of the first interrupt request.

With reference to the third aspect, in an implementation of the third aspect, before the processing module replaces the running entity in the target thread with the first target interrupt running entity, the processing module is further configured to store the running entity in the target thread.

With reference to the third aspect, in an implementation of the third aspect, in a process in which the target CPU runs the first target interrupt running entity, the processing module is further configured to: when a second interrupt request is triggered, determine that a CPU that responds to the second interrupt request is the target CPU, where a priority of the second interrupt request is higher than the priority of the first interrupt request; determine a second target interrupt running entity in the target CPU based on the priority of the second interrupt request, where a priority of the second target interrupt running entity is higher than a priority of the first target interrupt running entity; schedule the target thread from the user mode to the kernel mode; replace the first target interrupt running entity in the target thread with the second target interrupt running entity; and schedule the target thread including the second target interrupt running entity to the user mode, and run the second target interrupt running entity by using the target CPU.

With reference to the third aspect, in an implementation of the third aspect, before the processing module replaces the first target interrupt running entity in the target thread with the second target interrupt running entity, the processing module is further configured to store the first target interrupt running entity.

With reference to the third aspect, in an implementation of the third aspect, after running of the second target interrupt running entity is completed, the processing module is further configured to: schedule the target thread to the kernel mode; replace the second target interrupt running entity with the first target interrupt running entity; and schedule the target thread including the first target interrupt running entity to the user mode, and continue to run the first target interrupt running entity by using the target CPU.

With reference to the third aspect, in an implementation of the third aspect, after running of the first target interrupt running entity is completed, the processing module is further configured to: schedule the target thread to the kernel mode; replace the first target interrupt running entity with the running entity; and schedule the target thread including the running entity to the user mode, and continue to run the running entity by using the target CPU.

With reference to the third aspect, in an implementation of the third aspect, the apparatus includes a plurality of CPUs, and the processing module is specifically configured to determine, based on interrupt load sizes of the plurality of CPUs, the target CPU that responds to the first interrupt request. The first interrupt request is configured to be capable of being responded to by the target CPU.

With reference to the third aspect, in an implementation of the third aspect, the processing module is specifically configured to use a CPU with a lower interrupt load as the target CPU that responds to the first interrupt request.

With reference to the third aspect, in an implementation of the third aspect, the receiving module is further configured to receive indication information sent by a CPU, where the indication information indicates that the CPU is incapable of processing an interrupt. The processing module is specifically configured to determine the target CPU from a CPU that is capable of responding to the first interrupt request and that is other than the CPU that sends the indication information.

With reference to the third aspect, in an implementation of the third aspect, the first target interrupt running entity includes at least information that is related to interrupt running and that indicates an address space, and information about a general-purpose register including an interrupt number corresponding to the first interrupt request and a status register.

With reference to the third aspect, in an implementation of the third aspect, the second target interrupt running entity includes at least information that is related to interrupt running and that indicates an address space, and information about a general-purpose register including an interrupt number corresponding to the second interrupt request and a status register.

According to a fourth aspect, a chip is provided. The chip includes a processor and a communication interface. The communication interface is configured to: receive a signal and transmit the signal to the processor. The processor processes the signal, so that the interrupt processing method according to any one of the first aspect and the possible implementations of the first aspect is performed.

According to a fifth aspect, a readable storage medium is provided. The readable storage medium stores instructions, and when the instructions run on a device, the interrupt processing method according to any one of the first aspect and the possible implementations of the first aspect is performed.

According to a sixth aspect, a program product is provided. The program product includes program code, and when the program code is run on a device, the interrupt processing method according to any one of the first aspect and the possible implementations of the first aspect is performed.

### BRIEF DESCRIPTION OF DRAWINGS

FIG. 1 is a schematic flowchart of processing a user mode interrupt;
FIG. 2 is a diagram of a system architecture to which this application is applicable;
FIG. 3 is a schematic flowchart of interrupt processing according to an embodiment of this application;
FIG. 4(a) and FIG. 4(b) are a diagram of interrupt preemption according to an embodiment of this application;
FIG. 5 is a schematic flowchart of an interrupt processing method according to an embodiment of this application;
FIG. 6 is a schematic flowchart of an interrupt processing method according to an embodiment of this application;
FIG. 7 is a schematic block diagram of an electronic device according to an embodiment of this application; and
FIG. 8 is schematic block diagram of an interrupt processing apparatus according to an embodiment of this application.

### DESCRIPTION OF EMBODIMENTS

The following describes the technical solutions in embodiments of this application with reference to the accompanying drawings.

Before the technical solutions of this application are described, some technical terms used in embodiments of this application are first briefly described.

User space: Code is run at a low privilege level. Only some system resources can be seen, and a kernel space and a hardware device cannot be directly accessed. When a process runs in a user space, the process is referred to as being in a user running state (or briefly referred to as a user mode).

Kernel space: Code is run at a high privilege level. All system resources can be seen, and all permissions to access a hardware device are owned. For example, when a task (process) executes a system call and is trapped in kernel code for execution, the process is referred to as being in a kernel running state (or briefly referred to as a kernel mode).

A central processing unit (central processing unit, CPU) is a computing and control core of a computer, and is an execution unit of program running.

Interrupt: The interrupt is a process in which execution of a current program is suspended when being interrupted by an internal or external event of a CPU during CPU running and a specific program is executed. After processing is completed, the process returns to an original program to continue execution.

An interrupt number is a number provided by hardware for each interrupt source, to help a system identify and process an interrupt. For example, one type of interrupt may correspond to one interrupt number. For example, a mouse interrupt may correspond to an IRQ 4.

An interrupt priority indicates a sequence in which CPUs responds to interrupts.

Interrupt request (interrupt request, IRQ): When a peripheral needs to send an interrupt signal, the peripheral modifies a level of an interrupt pin connected to a generic interrupt controller (Generic Interrupt Controller, GIC) or hardware of an (advanced) programmable interrupt controller ((Advanced) Programmable Interrupt Controller, (A)PIC). The GIC or the (A)PIC notifies a CPU after identifying a level change of an interrupt signal line. The CPU stops a current execution flow and jumps to an interrupt processing program. Usually, an interrupt signal sent by a device to the GIC or the (A)PIC and sent by the GIC to the CPU is considered as an interrupt request IRQ on a software side. In this application, the IRQ represents an interrupt request.

A context (context) is a static description of a specific moment in a thread running process. Running of a thread/process is a dynamic process. If the thread or process is suspended, the context is states of all CPUs related to the thread/process at this moment. The context usually includes two aspects: a state, a group, a priority, affinity, and the like of a thread related to scheduling, which are used by an operating system to schedule the context; and a general-purpose register, a system register, a stack, and the like related to running. The context of the thread in this application may include two parts: a scheduling entity and a running entity.

Context switching: If a system call, an exception, or an interrupt occurs in a running process of a user mode program, processing needs to be performed in a kernel mode. In this case, a system is trapped in the kernel mode. A current user mode context (including a scheduling part and a running part) is stored in the kernel mode, and an original context in the kernel mode is restored, and vice versa. This process is referred to as context switching.

A scheduling entity (sched-context) is a part that is of a thread/process context and that stores scheduling information, and includes a thread running state, a thread priority, a thread group, and thread affinity. For a common thread, a scheduler may perform operations such as preemption, scheduling, and core switching on the thread based on information in the scheduling entity. When a user mode thread is woken up, the scheduler compares priorities in the scheduling entity in the thread context, and selects a thread with a high priority for processing.

A running entity (run-context) is a part that is of a thread/process context and that stores running information. Threads are classified into a scheduling entity and a running entity. Normal running of a thread/process may be ensured after the scheduling entity and the running entity are combined. After the thread enters a kernel, the running entity may be replaced, to change an execution flow of the thread. The running entity includes complete running context information (including information that indicates an address space, a general-purpose register, a status register, and the like). The running entity is more lightweight than the thread, and therefore has better performance.

An interrupt running entity (IRQ run-context) is a more simplified running entity. Compared with the running entity, the interrupt running entity has less context information (only information required for interrupt running is required, including the information that indicates the address space, some general-purpose registers, the status register, and the like). The interrupt running entity is an extremely simplified running entity, and has better performance when context switching is performed through the running entity.

A scheduler (scheduler) is a program used by an operating system to perform scheduling. The scheduler may determine which thread/process may run. A plurality of programs are allowed to effectively and simultaneously share a system resource. A normally running thread may be preempted by the scheduler, and another thread is run. In this application, the scheduler may sense a priority and affinity of a cooperative interrupt through an interrupt running entity, to correspondingly modify a scheduling policy for a thread that is running the interrupt running entity.

Scheduling affinity is a scheduling-related attribute, and has a tendency that a specific process needs to run in a specific CPU for a long period of time without being migrated to another CPU.

Interrupt affinity has a tendency that a global interrupt may be processed by a specific CPU in a multi-core scenario. A thread is a basic unit of scheduling and execution performed by an operating system.

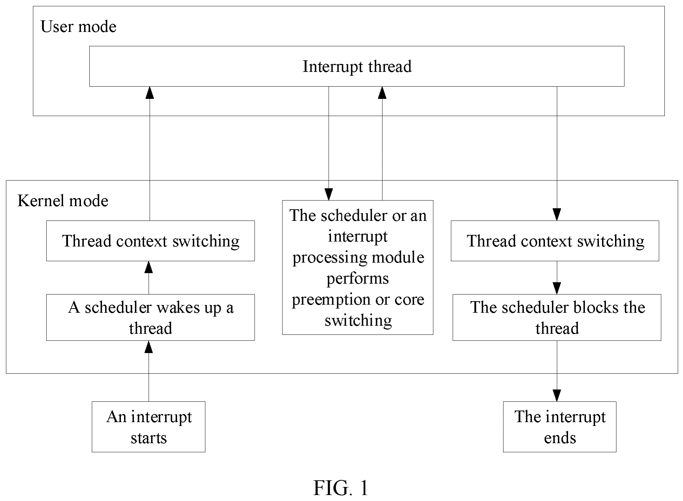

FIG. 1 is a schematic flowchart of processing a user mode interrupt. As shown in FIG. 1, an interrupt is usually from hardware GIC or (A)PIC. The GIC is used as an example. After receiving an IRQ from a device, the GIC may send the IRQ to a CPU. After receiving the IRQ, the CPU generates an interrupt exception, so that the CPU jumps to a kernel interrupt processing function for execution. After receiving an interrupt start message, a kernel wakes up a user mode thread corresponding to an interrupt number of the interrupt request by using a scheduler, switches a thread-level context (mainly including scheduling information, running information, an address space, a status register, and a general-purpose register), and returns to a user mode. Then, a user mode interrupt thread is run. During running of the interrupt thread, the scheduler may perform operations such as preemption or core switching on the user mode interrupt thread, so that the interrupt thread is blocked or preempted, or another interrupt may interrupt the running user mode interrupt thread again. Interrupt processing can be continued only after the interrupt thread completes a new task. After interrupt processing is completed, the interrupt thread may be enabled to return to a kernel mode through a system call, and a thread context (including a scheduling entity and a running entity) is stored. Then, the scheduler blocks the thread again, so that the thread enters a blocked state, and interrupt processing is completed.

It can be learned from the foregoing interrupt processing process that, in a period from a moment at which the interrupt is started to a moment at which the interrupt thread runs in the user mode, factors such as the scheduler and the thread context exert impact, and a speed at which the thread returns from the kernel mode to the user mode determines a user mode interrupt response speed. In addition, during running of the user mode interrupt thread, the scheduler may exert impact. Consequently, the interrupt thread is blocked or preempted, or another interrupt may interrupt the user mode interrupt thread again. Consequently, real-time performance of the interrupt cannot be ensured.

In view of this, this application provides an interrupt processing method and apparatus, and an electronic device. In the technical solution, an interrupt response speed can be improved by using a simplified context. In addition, a scheduling module of an electronic device can sense an interrupt, to avoid an operation such as preemption or core switching on an interrupt processing thread in an interrupt processing period. In addition, multi-layer classification is performed on the interrupt, to prevent a current user mode interrupt thread during running from being interrupted by another interrupt, thereby ensuring real-time performance of the interrupt.

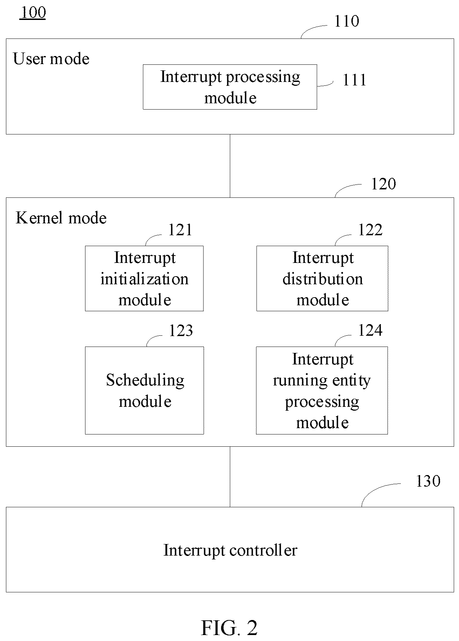

The following describes the technical solutions of the interrupt processing method in this application with reference to FIG. 2 to FIG. 6.

FIG. 2 is a diagram of a system architecture of an electronic device to which this application is applicable. As shown in FIG. 2, the interrupt processing method may be applied to an electronic device 100. The electronic device 100 may include at least user space 110, kernel space 120, and an interrupt controller 130.

The interrupt controller 130 may be configured to send an interrupt request of a peripheral to a CPU. For example, the interrupt controller 130 may be a GIC or an (A)PIC.

The kernel space 120 may include an interrupt initialization module 121, an interrupt distribution module 122, a scheduling module 123, and an interrupt running entity processing module 124.

The interrupt initialization module 121 may be configured to: initialize an interrupt, configure a group and a priority of the interrupt, create an interrupt running entity, and the like. For example, the interrupt initialization module 121 may establish an interrupt running entity resource pool for each CPU. The interrupt running entity resource pool may include a plurality of interrupt running entities with different priorities.

It should be understood that, a quantity of interrupt running entities included in the interrupt running entity resource pool is not limited in this embodiment of this application.

It should be understood that different interrupt running entities in the interrupt running entity resource pool have different priorities.

The interrupt distribution module 122 may determine a corresponding interrupt running entity based on an interrupt number, an interrupt priority, and a CPU.

For example, the electronic device 100 may include a CPU 1 and a CPU 2, and each CPU has an interrupt running entity resource pool. For example, an interrupt running entity resource pool of the CPU 1 may include an interrupt running entity A1 with a high priority, an interrupt running entity B1 with a medium priority, and an interrupt running entity C1 with a low priority; and the interrupt running entity resource pool of the CPU 2 may include an interrupt running entity A2 with a high priority, an interrupt running entity B2 with a medium priority, and an interrupt running entity B2 with a low priority.

The interrupt running entity resource pool is established for each CPU, so that the interrupt distribution module 122 can determine the corresponding interrupt running entity based on the interrupt number, the interrupt priority, and the CPU, to ensure a consistency between a CPU that responds and a running CPU of an interrupt. The interrupt running entity is associated with the interrupt priority and interrupt affinity, to avoid a phenomenon that the interrupt distribution module 122 runs on the CPU 1 and an interrupt processing module 111 runs on the CPU 2, thereby helping implement operations such as mutual exclusion and mutual exclusion on the interrupt.

It should be understood that, that the interrupt distribution module 122 runs on the CPU 1 may be understood as that the interrupt is responded to by the CPU 1. That the interrupt processing module 111 runs on the CPU 2 may be understood as that the interrupt is processed by the CPU 2.

In this embodiment of this application, compared with a running entity, the interrupt running entity includes less context information, and only needs to include information related to interrupt running, for example, an address space, some general-purpose registers (used to store the interrupt number), and a status register. It should be understood that, because the some general-purpose registers in a context of the interrupt running entity may be configured to store the interrupt number, and do not need to store other information, a thread including the interrupt running entity can return to a user mode more quickly.

The scheduling module 123 may identify that an interrupt thread is running the interrupt running entity, so that the interrupt can be sensed in a case of a scheduling behavior such as wakeup, core switching, or preemption. During running of the interrupt running entity, a scheduling operation such as core switching and preemption is avoided, and an interrupt by another interrupt is avoided, to ensure real-time performance of interrupt processing. For example, the scheduling module 123 may be a scheduler. When determining, based on a running entity in a thread, that the running entity is an interrupt running entity, the scheduler may determine that the thread is processing an interrupt, to correspondingly adjust a behavior and a policy of the scheduler. For example, a priority of the thread is temporarily increased, and scheduling is not performed, to ensure real-time performance of interrupt processing.

The interrupt running entity processing module 124 may be configured to: perform operations such as preemption, storage, and restoring on the interrupt running entity, replace a common running entity in the thread with the interrupt running entity, and quickly return to the user mode through a specific thread or a preempted thread.

The user space 110 may include the interrupt processing module 111. The interrupt processing module 111 may process a user mode interrupt after determining the corresponding interrupt number based on the interrupt running entity.

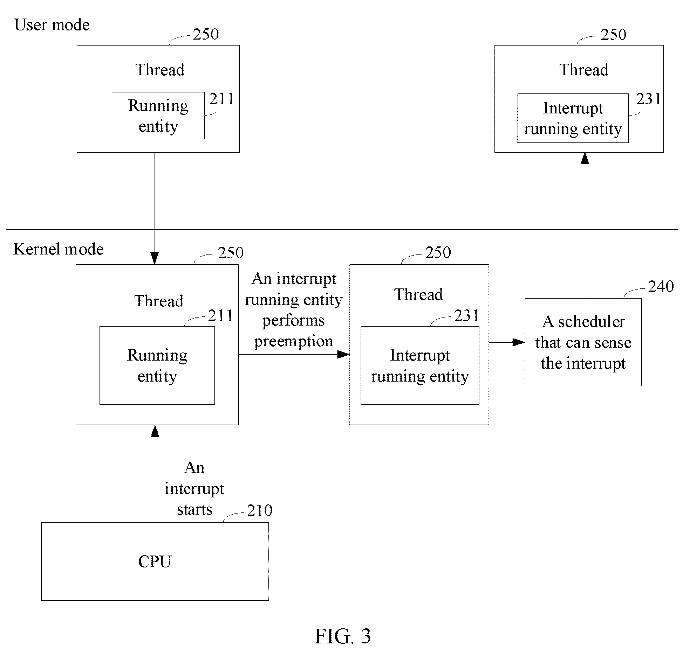

FIG. 3 is a schematic flowchart of interrupt processing according to an embodiment of this application. As shown in FIG. 3, a thread 250 normally runs in a user mode. After receiving an interrupt request from an interrupt controller, a CPU 210 sends an interrupt start signal to a kernel, and hardware preempts the thread 250 that is running in the user mode to enter a kernel mode. A running entity 211 in the thread 250 is stored in the kernel. The running entity 211 may include information that indicates an address space, a general-purpose register, a status register, and the like. Then, the kernel determines a corresponding interrupt running entity 231 based on an interrupt priority, and replaces the running entity 211 in the thread 250 with the interrupt running entity 231, to form a new context of the thread 250. A running context included in the interrupt running entity 231 includes an address space, a general-purpose register used to store an interrupt number, and a status register. Then, a scheduler 240 that can sense an interrupt may schedule the thread 250 to the user mode, so that the thread 250 serves as an interrupt processing thread to process the interrupt.

It may be understood that, when the interrupt is processed, the kernel uses the interrupt running entity 231 to preempt the running entity 211 in the thread 250, and reuses a scheduling entity in the thread 250. Therefore, when the thread 250 is scheduled from the user mode to the kernel mode, the kernel only needs to store the running entity in the thread 250, and does not need to store the scheduling entity in the thread 250, so that an interrupt processing speed can be faster.

Because the scheduler 240 can sense the interrupt, scheduling operations such as core switching and preemption on the thread 250 may be avoided in an interrupt processing period, to ensure real-time performance of interrupt processing.

It may be understood that, the preempted thread 250 may be understood as that, before the interrupt is started, the thread 250 is executing another task; and after the interrupt is started, a system uses the thread 250 to process the interrupt. In this case, the task that is being executed by the thread 250 is suspended. After completing processing of the interrupt, the thread 250 may continue to execute the original task.

Alternatively, the preempted thread 250 may be understood as a thread that is created by a system and that may be used to process the interrupt.

In some other examples, after the system is started, the system may further create a thread in the user mode in advance, and after the interrupt is started, use the thread to process the interrupt, to avoid preempting a thread that is executing another task to process the interrupt.

It should be understood that, when the created thread processes the interrupt, the interrupt running entity may also be used to preempt a running entity in the created thread, and an original scheduling entity in the created thread is reused, so that the thread can quickly return to the user mode.

In an embodiment of this application, when the system processes the interrupt, the running entity in the preempted thread may be replaced with an interrupt running entity including some running contexts, so that the preempted thread includes fewer running contexts, and the thread can return to the user mode more quickly to process the interrupt. In addition, because the scheduler can sense the interrupt, the scheduling operations such as core switching and preemption on the thread may be avoided in the interrupt processing period, to ensure real-time performance of interrupt processing.

Further, in this embodiment of this application, a plurality of interrupt running entities with different priorities may be configured for each CPU. When processing the interrupt, an electronic device may select the corresponding interrupt running entity based on the interrupt priority, so that a current interrupt during running can be prevented from being interrupted by another interrupt with a same priority or a low priority, thereby ensuring real-time performance of interrupt processing.

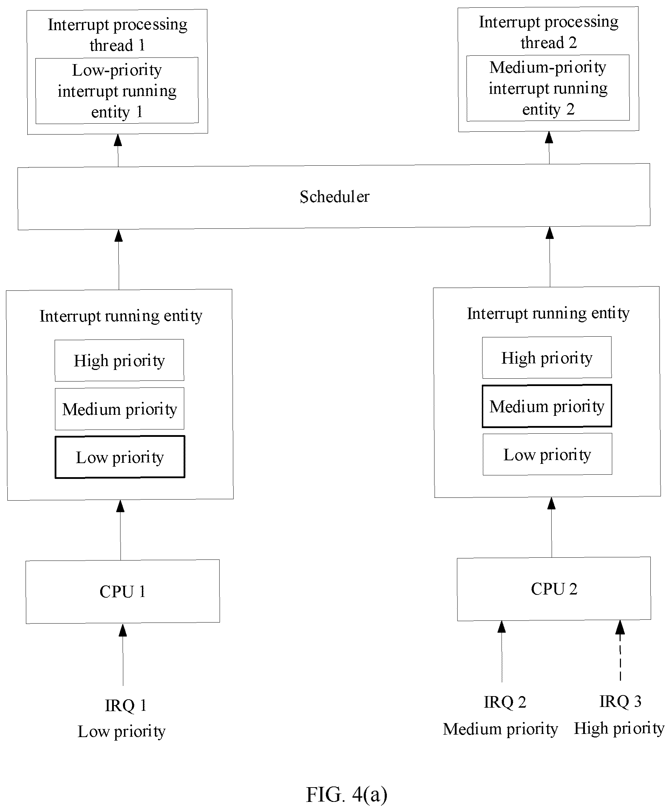

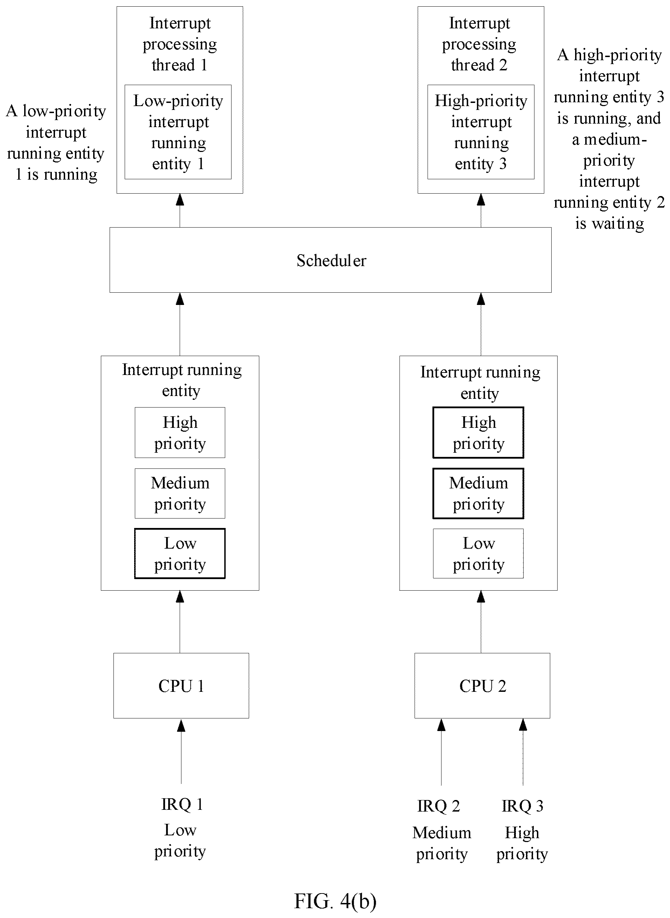

In some cases, an interrupt may further need to be processed when another interrupt is being processed. Due to different priorities of interrupts, an interrupt with a high priority needs to be preferentially processed by the system. The following describes the technical solution with reference to FIG. 4(a) and FIG. 4(b).

FIG. 4(a) and FIG. 4(b) are a diagram of interrupt preemption according to an embodiment of this application. FIG. 4(a) and FIG. 4(b) show a process in which an interrupt with a high priority preempts an interrupt with a low priority. It may be understood that preemption herein may be understood as a system performs preferential processing.

As shown in FIG. 4(a), an electronic device may include a CPU 1 and a CPU 2. The CPU 1 may be configured to respond to an IRQ 1, and the CPU 2 may be configured to respond to an IRQ 2. A kernel may determine a corresponding interrupt running entity based on an interrupt number corresponding to an IRQ, a CPU that responds to the IRQ, and an interrupt priority. Then, a running entity in a preempted thread is replaced with the determined interrupt running entity. Then, a scheduler may schedule an interrupt processing thread including the interrupt running entity to a user mode, to process an interrupt.

For example, the kernel may determine an interrupt running entity 1 with a low priority in the CPU 1 based on an interrupt number corresponding to the IRQ 1, an interrupt priority, and the CPU 1 that responds. Then, the scheduler may schedule an interrupt processing thread including the interrupt running entity 1 to the user mode, to process an interrupt corresponding to the IRQ 1. The kernel may determine an interrupt running entity 2 with a medium priority in the CPU 2 based on an interrupt number corresponding to the IRQ 2, an interrupt priority, and the CPU 2 that responds. Then, the scheduler may schedule an interrupt processing thread including the interrupt running entity 2 to the user mode to process an interrupt corresponding to the IRQ 2.

It should be understood that a priority of the IRQ may be preconfigured by the system. For example, an interrupt initialization module in the kernel may classify the priority of the IRQ. For example, for the CPU 1, the interrupt initialization module may configure three running entities: an interrupt running entity with a high priority, an interrupt running entity with a medium priority, and an interrupt running entity with a low priority that run in the CPU 1; and for the CPU 2, the interrupt initialization module may configure three running entities: an interrupt running entity with a high priority, an interrupt running entity with a medium priority, and an interrupt running entity with a low priority that run in the CPU 2. In some other examples, a quantity of interrupt running entities that are configured by the interrupt initialization module and that run in the CPU may be another quantity, for example, four or more, and different interrupt running entities have different priorities.

It should be understood that specific IRQs to which the CPU responds may be preset by the system. In some cases, one IRQ may be further responded to by a plurality of CPUs. For example, the IRQ 1 may be responded to by the CPU 1 or the CPU 2, but finally can be responded to only by one of the CPU 1 or the CPU 2. When the IRQ is responded to by the CPU 1, the kernel may determine, based on the interrupt number corresponding to the IRQ, the CPU 1 that responds to the IRQ, and the interrupt priority, an interrupt running entity running in the CPU 1, to ensure a consistency between a CPU that responds and a running CPU of the IRQ.

In some cases, when the system is processing the interrupt corresponding to the IRQ 2, if the CPU 2 further receives an IRQ 3, and a priority of the IRQ 3 is higher than a priority of the IRQ 2, the system may preferentially process the IRQ 3.

As shown in FIG. 4(b), the system continues to run an interrupt processing thread 1 in the CPU 1, to process the interrupt corresponding to the IRQ 1. However, because the CPU 2 receives the IRQ 3 with a higher priority, the kernel may determine, based on an interrupt number corresponding to the IRQ 3, the CPU 2 that responds to the IRQ 3, and an interrupt priority, an interrupt running entity with a high priority that runs in the CPU 2. In this case, the kernel may replace an interrupt running entity with a medium priority in an interrupt processing thread 2 with an interrupt running entity with a high priority, and return the interrupt processing thread 2 including the interrupt running entity with the high priority to the user mode, to process an interrupt corresponding to the IRQ 3 and complete interrupt preemption.

It should be understood that, after the interrupt running entity with the medium priority is preempted by the interrupt running entity with the high priority, the system suspends processing of the interrupt corresponding to the IRQ 2, and continues to process the interrupt corresponding to the IRQ 2 after processing of the interrupt corresponding to the IRQ 3 is completed, to ensure that the interrupt with the high priority can be preferentially processed.

In an embodiment of this application, the kernel configures interrupt running entities with different priorities for each CPU, so that a CPU that responds and a running CPU of the IRQ are consistent. When the system is processing an IRQ, the CPU further receives another IRQ with a high priority. In this case, the system may use an interrupt running entity with a high priority to preempt an interrupt running entity with a low priority, so that the interrupt with the high priority can be preferentially processed, to ensure real-time performance of the interrupt with the high priority.

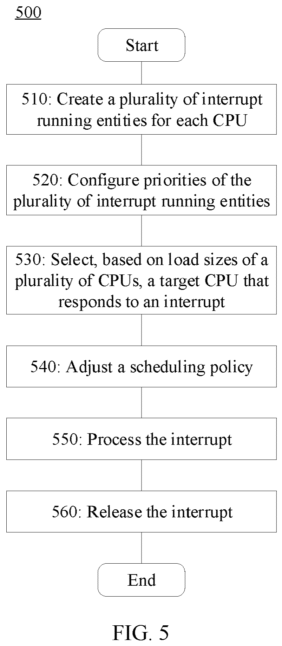

FIG. 5 is a schematic flowchart of an interrupt processing method according to an embodiment of this application. As shown in FIG. 5, a method 500 may be applied to an electronic device, and the method 500 may include step 510 to step 560.

510: The electronic device creates a plurality of interrupt running entities for each CPU.

In this embodiment of this application, the electronic device may include a plurality of CPUs.

For example, as shown in FIG. 2, the electronic device may include an interrupt initialization module 121. The interrupt initialization module 121 may be configured to create a plurality of interrupt running entities for each CPU. For example, the interrupt initialization module 121 may create three or more interrupt running entities for each CPU. In some other examples, another module in the electronic device may alternatively create a plurality of interrupt running entities. This is not limited in this embodiment of this application.

520: The electronic device configures priorities of the plurality of interrupt running entities.

For example, the interrupt initialization module in the electronic device may be configured to configure the priorities for the plurality of created interrupt running entities.

For example, the electronic device creates three interrupt running entities for each CPU: an interrupt running entity 1, an interrupt running entity 2, and an interrupt running entity 3. In this case, the electronic device may configure a priority of each interrupt running entity, for example, configure the interrupt running entity 1 to have a high priority, configure the interrupt running entity 2 to have a medium priority, and configure the interrupt running entity 3 to have a low priority.

In some other examples, the electronic device may further create the plurality of interrupt running entities, and group the plurality of interrupt running entities. Interrupt running entities in a same group have a same priority.

In some other examples, step 510 and step 520 may be performed synchronously, or step 510 and step 520 may be a same step.

530: The electronic device selects, based on load sizes of the plurality of CPUs, a target CPU that responds to an interrupt.

In this embodiment of this application, the electronic device may include the plurality of CPUs. For an interrupt, the electronic device may configure the interrupt to be capable of being responded to by the plurality of CPUs. When actually processing the interrupt, the electronic device may select, based on the load sizes of the plurality of CPUs, a target CPU that responds to the interrupt.

For example, the electronic device may include a CPU 1 and a CPU 2, and an interrupt 1 is configured to be capable of being responded to by the CPU 1 or the CPU 2. The electronic device may obtain interrupt load sizes that are of the CPU 1 and the CPU 2 and that are used to process an interrupt. In this case, the electronic device may select, based on interrupt load sizes of the CPU 1 and the CPU 2, a CPU that responds to the interrupt 1. For example, the electronic device may use the CPU 1 with a lower interrupt load as a target CPU that responds to the interrupt 1.

In another example, when an overall load of the CPU is high, indication information may be sent to hardware. The indication information may indicate that a current load of the CPU is high and the interrupt cannot be processed temporarily. In this case, the electronic device may select another CPU to process the interrupt. For example, if the electronic device receives indication information sent by the CPU 1, the electronic device may select the CPU 2 to process the interrupt.

In some other examples, a peripheral may trigger the interrupt 1, and select the CPU 1 and the CPU 2 based on an interrupt configuration status. The CPU 1 and the CPU 2 may determine, based on load statuses of the CPU 1 and the CPU 2, whether to respond to the interrupt 1.

It may be understood that, in this embodiment of this application, the electronic device creates the plurality of interrupt running entities for each CPU, and configures the priorities for the plurality of interrupt running entities, so that an interrupt running entity corresponding to a CPU that responds to an interrupt is used to perform interrupt processing in a user mode in the CPU. This ensures that a user mode interrupt processing thread runs on a CPU that responds to an interrupt, to avoid redundant operations such as preemption and core switching.

540: The electronic device adjusts a scheduling policy.

For example, the electronic device may include a scheduling module, for example, a scheduler. The scheduler may determine information such as a priority and a group of the interrupt based on the interrupt running entity, so that the scheduler can properly adjust the scheduling policy.

For example, the scheduling policy may include but is not limited to: not performing the redundant operations such as preemption and core switching on a thread that runs the interrupt running entity; adjusting a priority of a preempted thread based on a priority of the interrupt running entity, and when the interrupt running entity performs preemption, waking up an interrupt processing thread to process an interrupt; and during running of a current interrupt running entity, an interrupt with a same priority or an interrupt with a low priority waits to be processed.

550: The electronic device processes the interrupt.

In a possible implementation, when processing the interrupt, the electronic device preempts a common thread to process the interrupt. In this case, after the common thread is trapped from the user mode to a kernel mode, the kernel may obtain an interrupt number and an interrupt priority by using an interrupt hardware register, determine a corresponding interrupt running entity based on the interrupt number and the interrupt priority, replace a running entity in the common thread with the interrupt running entity, and schedule, by using the scheduler, a thread including the interrupt running entity to the user mode to process the interrupt.

In some other examples, the common thread may alternatively be a thread that is newly created by the electronic device to process an interrupt.

In another possible implementation, when processing the interrupt 1, the electronic device uses the interrupt running entity 1 corresponding to the interrupt 1 to preempt the interrupt running entity 2 in the interrupt processing thread to process the interrupt. In this case, a priority of the interrupt running entity 1 is higher than a priority of the interrupt running entity 2. The electronic device schedules the interrupt processing thread from the user mode to the kernel mode, stores context information of the interrupt processing thread, replaces the interrupt running entity 2 with the interrupt running entity 1 with a high priority, schedules the interrupt processing thread including the interrupt running entity 1 to the user mode, and runs the interrupt running entity to process the interrupt 1. After completing processing of the interrupt 1, the electronic device restores running of the interrupt running entity 2, to continue to process the interrupt 2.

In this way, the electronic device may use the interrupt running entity with the high priority to preempt the interrupt running entity with the low priority, so that an interrupt corresponding to the interrupt running entity with the high priority can be processed in a timely manner, to ensure real-time performance of processing the interrupt with the high priority. In addition, in a processing period of the interrupt with the high priority, an interrupt with a same priority or an interrupt with a priority lower than a current priority cannot interrupt a user mode interrupt processing thread with the current high priority, to ensure real-time performance of process a current interrupt.

560: The electronic device releases the interrupt.

After completing execution of the interrupt in the user mode, the electronic device may schedule the interrupt processing thread from the user mode to the kernel mode, restore a running entity in the interrupt processing thread, and release the interrupt; and then schedule the interrupt processing thread to the user mode, so that the interrupt processing thread normally processes a task of the interrupt processing thread.

It should be understood that a specific execution sequence of step 510 to step 560 is not limited in this embodiment of this application. In some embodiments, some steps in step 510 to step 560 may not be performed, may be replaced with other steps, or the like.

In an embodiment of this application, the electronic device may include the plurality of CPUs, create the plurality of interrupt running entities for each CPU, and configure the priorities for the plurality of interrupt running entities. The interrupt is configured to be capable of being responded to by the plurality of CPUs. When actually processing the interrupt, the electronic device may determine the target CPU that responds to the interrupt, and further determine an interrupt running entity running in the target CPU, so that a CPU that responds to the interrupt and the running CPU are consistent, to avoid redundant operations such as preemption and core switching. In addition, because the scheduling module of the electronic device can sense the interrupt, scheduling operations such as core switching and preemption on the interrupt processing thread may be avoided in an interrupt processing period, to ensure real-time performance of interrupt processing. Further, interrupt running entities with a plurality of priorities are configured, so that During current interrupt running, a user mode interrupt processing thread with a current priority can be prevented from being interrupted by another interrupt with a same priority or another interrupt with a priority lower than the current priority, to further ensure real-time performance of process a current interrupt.

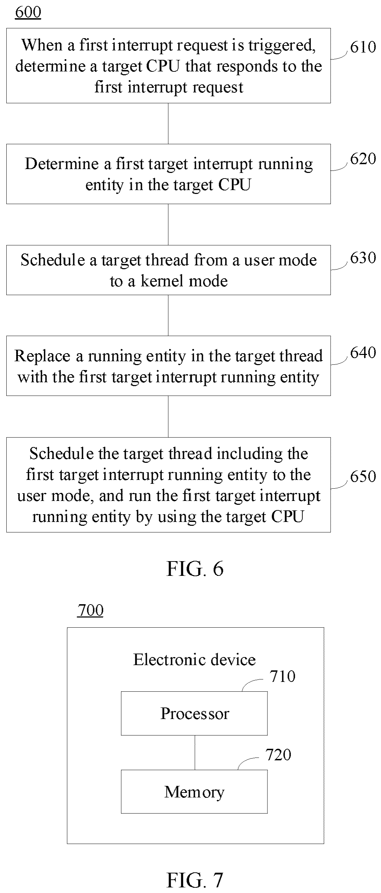

FIG. 6 is a schematic flowchart of an interrupt processing method according to an embodiment of this application. As shown in FIG. 6, a method 600 may be applied to an electronic device, and the method 600 may include step 610 to step 650.

610: When a first interrupt request is triggered, the electronic device determines a target CPU that responds to the first interrupt request.

For example, that the first interrupt request is triggered may be understood as that a GIC of the electronic device receives the first interrupt request, or a GIC sends the first interrupt request to a CPU.

It should be understood that the electronic device may include a plurality of CPUs. For example, the electronic device includes a CPU 1 and a CPU 2, and the electronic device may determine, from the CPU 1 and the CPU 2, the target CPU that responds to the first interrupt request.

In a possible implementation, the electronic device determines, based on interrupt load sizes of the plurality of CPUs, the target CPU that responds to the first interrupt request. The first interrupt request is configured to be capable of being responded to by the target CPU.

It should be understood that the electronic device may obtain the interrupt load sizes of the plurality of CPUs, and may determine, based on the interrupt load sizes of the plurality of CPUs, the target CPU that responds to the first interrupt request.

For example, the electronic device includes the CPU 1 and the CPU 2, and the first interrupt request is configured to be capable of being responded to by the CPU 1 and the CPU 2. The electronic device may use a CPU with a smallest interrupt load size as a CPU that responds to the first interrupt request.

In another possible implementation, the electronic device receives indication information sent by a CPU. The indication information indicates that the CPU is incapable of processing an interrupt. The electronic device determines the target CPU from a CPU that is capable of responding to the first interrupt request and that is other than the CPU that sends the indication information.

It should be understood that, when an overall load of the CPU 1 is high, the CPU 1 may send, to hardware of the electronic device, indication information indicating that an interrupt cannot be processed. In this case, the electronic device may select, from a CPU other than the CPU 1, the target CPU that responds to the first interrupt request.

620: The electronic device determines a first target interrupt running entity in the target CPU.

For example, the electronic device may create an interrupt running entity resource pool for each CPU. The interrupt running entity resource pool may include a plurality of interrupt running entities, and the plurality of interrupt running entities have different priorities. The electronic device may determine a corresponding first target interrupt running entity based on a priority of the first interrupt request.

For example, if the priority of the first interrupt request is a high priority, the electronic device may use an interrupt running entity with a high priority in the target CPU as the first target interrupt running entity.

In some other examples, the electronic device may alternatively determine the first target interrupt running entity in the target CPU in another manner. This is not limited in this embodiment of this application.

630: The electronic device schedules a target thread from a user mode to a kernel mode.

The target thread may be a thread that is running in the user mode. In this case, the electronic device may schedule the target thread from the user mode to the kernel mode.

In some examples, the electronic device schedules the target thread from the user mode to the kernel mode, and stores a running entity in the target thread.

It should be understood that the electronic device may reuse a scheduling entity in the target thread. Therefore, when the electronic device schedules the target thread from the user mode to the kernel mode, only the running entity in the target thread needs to be stored, so that an interrupt processing speed can be increased.

640: The electronic device replaces the running entity in the target thread with the first target interrupt running entity. It should be understood that, after the electronic device replaces the running entity in the target thread with the first target interrupt running entity, the target thread may include the first target interrupt running entity and the scheduling entity.

650: The electronic device schedules the target thread including the first target interrupt running entity to the user mode, and runs the first target interrupt running entity by using the target CPU.

For example, the electronic device schedules the target thread including the first target interrupt running entity to the user mode, and runs the first target interrupt running entity by using the target CPU, to perform interrupt processing. In this way, it is ensured that a CPU that responds to the first interrupt request and a CPU that processes the first interrupt request are a same CPU, to help implement operations such as mutual exclusion and mutual exclusion on the interrupt.

In an embodiment of this application, when the first interrupt request is triggered, the electronic device may determine the target CPU that responds to the first interrupt request; determine the first target interrupt running entity in the target CPU, and then preempt the target thread that is running in the user mode to enter the kernel mode; replace the running entity in the target thread with the first target interrupt running entity; and then schedule the target thread to the user mode, and run the first target interrupt running entity in the target CPU.

In this way, in an interrupt processing process, an interrupt running entity replaces a common running entity. Because the interrupt running entity includes less content, an interrupt response speed can be improved. Further, the electronic device may sense interrupt running by using the interrupt running entity, to avoid an operation such as preemption or core switching performed on an interrupt processing thread due to interruption or scheduling during interrupt running, thereby ensuring real-time performance the interrupt.

In some embodiments, that the electronic device determines a first target interrupt running entity in the target CPU includes:
determining the first target interrupt running entity in the target CPU based on a priority of the first interrupt request.

In this embodiment of this application, different interrupt requests may have different priorities. The electronic device may determine an interrupt running entity in the target CPU based on a priority of an interrupt request. A priority of the interrupt running entity corresponds to the priority of the interrupt request. In this way, it can be ensured that interrupt requests with different priorities correspond to different target interrupt running entities, so that a current interrupt during running can be prevented from being interrupted by another interrupt with a same priority or a low priority, thereby ensuring real-time performance of interrupt processing.

In some embodiments, the method 600 may further include:
The electronic device creates an interrupt running entity resource pool for the target CPU. The interrupt running entity resource pool includes a plurality of interrupt running entities, and the plurality of interrupt running entities have different priorities.

That the electronic device determines the first target interrupt running entity in the target CPU based on a priority of the first interrupt request includes:
The electronic device determines the first target interrupt running entity from the interrupt running entity resource pool based on the priority of the first interrupt request.

In an embodiment of this application, the electronic device may create an interrupt running entity resource pool for each CPU. The interrupt running entity resource pool may include a plurality of interrupt running entities with different priorities, so that the electronic device can determine a corresponding interrupt running entity from the interrupt running entity resource pool based on the priority of the interrupt request.

In this way, each interrupt request has an interrupt running entity with a corresponding priority, so that a current interrupt during running can be prevented from being interrupted by another interrupt with a same priority or a low priority, thereby ensuring real-time performance of interrupt processing.

In some embodiments, before the electronic device replaces the running entity in the target thread with the first target interrupt running entity, the method 600 may further include:
The electronic device stores the running entity in the target thread.

In this embodiment of this application, the electronic device may store the running entity in the target thread, and does not need to store a scheduling entity in the target thread, so that an interrupt processing speed can be faster, and after interrupt processing is completed, the target thread can quickly return to the user mode.

In some embodiments, in a process in which the target CPU runs the first target interrupt running entity, the method 600 may further include:
When a second interrupt request is triggered, the electronic device determines that a CPU that responds to the second interrupt request is the target CPU. A priority of the second interrupt request is higher than the priority of the first interrupt request.

The electronic device determines a second target interrupt running entity in the target CPU based on the priority of the second interrupt request. A priority of the second target interrupt running entity is higher than a priority of the first target interrupt running entity.

The electronic device schedules a target thread from a user mode to a kernel mode.

The electronic device replaces the first target interrupt running entity in the target thread with the second target interrupt running entity.

The electronic device schedules the target thread including the second target interrupt running entity to the user mode, and runs the second target interrupt running entity by using the target CPU.

For example, as shown in FIG. 4(a) and FIG. 4(b), the first interrupt request may be an IRQ 2, and the second interrupt request may be an IRQ 3.

In this embodiment of this application, in the process in which the target CPU runs the first target interrupt running entity, the electronic device further triggers or receives the second interrupt request with a higher priority. The CPU that responds to the second interrupt request is also the target CPU. In this case, the electronic device may determine the second target interrupt running entity in the target CPU based on the priority of the second interrupt request, schedule the target thread from the user mode to the kernel mode, and replace the first target interrupt running entity in the target thread with the second target interrupt running entity. Then, the electronic device schedules the target thread including the second target interrupt running entity to the user mode, and runs the second target interrupt running entity by using the target CPU.

In the technical solution, an interrupt running entity with a high priority may be used to preempt an interrupt running entity with a low priority, to ensure that an interrupt with a high priority can be preferentially processed.

In some other examples, in the process in which the target CPU runs the first target interrupt running entity, if the electronic device receives a priority of another interrupt request whose priority is less than or equal to that of the first interrupt request, the electronic device may continue to process the another interrupt after completing processing of the first interrupt request. In this way, the current interrupt is prevented from being interrupted by another interrupt with a same priority or a low priority.

In some embodiments, before the electronic device replaces the first target interrupt running entity in the target thread with the second target interrupt running entity, the method 600 further includes:
The electronic device stores the first target interrupt running entity.

In this embodiment of this application, before the electronic device replaces the first target interrupt running entity in the target thread with the second target interrupt running entity, the electronic device may store the first target interrupt running entity, and does not need to store the scheduling entity, to quickly return to the user mode when the first target interrupt running entity is subsequently run.

In some embodiments, after running of the second target interrupt running entity is completed, the method 600 may further include:
The electronic device schedules the target thread to the kernel mode.

The electronic device replaces the second target interrupt running entity with the first target interrupt running entity.

The electronic device schedules the target thread including the first target interrupt running entity to the user mode, and continues to run the first target interrupt running entity by using the target CPU.

In this embodiment of this application, after running of the second target interrupt running entity with a high priority is completed, the electronic device may continue to run the first target interrupt running entity. This helps ensure that an interrupt with a high priority can be processed in a timely manner.

In some embodiments, after running of the first target interrupt running entity is completed, the method 600 may further include: The electronic device schedules the target thread to the kernel mode.

The electronic device replaces the first target interrupt running entity with the running entity.

The electronic device schedules the target thread including the running entity to the user mode, and continues to run the running entity by using the target CPU.

In this embodiment of this application, after running of the first target interrupt running entity is completed, the electronic device may schedule the target thread to the kernel mode, replace the first target interrupt running entity with an original running entity in the target thread, and return the target thread to the user mode for running, so that the target thread continues to execute an original task of the target thread.

In some embodiments, the first target interrupt running entity includes at least information that is related to interrupt running and that indicates an address space, and information about a general-purpose register including an interrupt number corresponding to the first interrupt request and a status register.

In this embodiment of this application, the first target interrupt running entity includes less content than a common running entity, to improve a speed of responding to the first interrupt request.

In some embodiments, the second target interrupt running entity includes at least information that is related to interrupt running and that indicates an address space, and information about a general-purpose register including an interrupt number corresponding to the second interrupt request and a status register.

In this embodiment of this application, the second target interrupt running entity includes less content than a common running entity, to improve a speed of responding to the second interrupt request.

FIG. 7 is a schematic block diagram of an electronic device according to an embodiment of this application. As shown in FIG. 7, an electronic device 700 may include one or more processors 710 and one or more memories 720. The one or more memories 720 store one or more programs. When the one or more programs are executed by the one or more processors 710, the interrupt processing method according to any one of the foregoing possible implementations is performed.

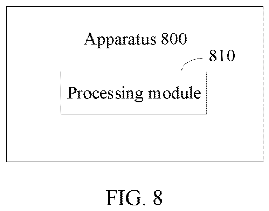

FIG. 8 is schematic block diagram of an interrupt processing apparatus according to an embodiment of this application.

As shown in FIG. 8, an apparatus 800 may include a processing module 810.

The processing module 810 may be configured to:
when a first interrupt request is triggered, determine a target CPU that responds to the first interrupt request;
determine a first target interrupt running entity in the target CPU;
replace a running entity in the target thread with the first target interrupt running entity; and
schedule the target thread including the first target interrupt running entity to the user mode, and run the first target interrupt running entity by using the target CPU.

For example, the processing module 810 may be the interrupt distribution module 122, the scheduling module 123, the interrupt running entity processing module 124, a terminal processing module 111, or the like in the foregoing descriptions.

In some embodiments, the processing module 810 is further configured to:
create an interrupt running entity resource pool for the target CPU, where the interrupt running entity resource pool includes a plurality of interrupt running entities, and the plurality of interrupt running entities have different priorities.

The processing module 810 is specifically configured to:
determine the first target interrupt running entity from the interrupt running entity resource pool based on the priority of the first interrupt request.

In some embodiments, before the processing module replaces the running entity in the target thread with the first target interrupt running entity, the processing module 810 is further configured to:
store the running entity in the target thread.

In some embodiments, in a process in which the target CPU runs the first target interrupt running entity,
the processing module 810 is further configured to:
when a second interrupt request is triggered, determine that a CPU that responds to the second interrupt request is the target CPU, where a priority of the second interrupt request is higher than the priority of the first interrupt request;
determine a second target interrupt running entity in the target CPU based on the priority of the second interrupt request, where a priority of the second target interrupt running entity is higher than a priority of the first target interrupt running entity;
schedule a target thread from a user mode to a kernel mode;
replace the first target interrupt running entity in the target thread with the second target interrupt running entity; and
schedule the target thread including the second target interrupt running entity to the user mode, and run the second target interrupt running entity by using the target CPU.

In some embodiments, before the processing module 810 replaces the first target interrupt running entity in the target thread with the second target interrupt running entity, the processing module 810 is further configured to:
store the first target interrupt running entity.

In some embodiments, after running of the second target interrupt running entity is completed, the processing module 810 is further configured to:
schedule the target thread to the kernel mode;
replace the second target interrupt running entity with the first target interrupt running entity; and
schedule the target thread including the first target interrupt running entity to the user mode, and continue to run the first target interrupt running entity by using the target CPU.

In some embodiments, after running of the first target interrupt running entity is completed, the processing module 810 is further configured to:
schedule the target thread to the kernel mode;
replace the first target interrupt running entity with the running entity; and
schedule the target thread including the running entity to the user mode, and continue to run the running entity by using the target CPU.

In some embodiments, the apparatus 800 may include a plurality of CPUs, and the processing module 810 is specifically configured to:
determine, based on interrupt load sizes of the plurality of CPUs, the target CPU that responds to the first interrupt request, where the first interrupt request is configured to be capable of being responded to by the target CPU. In some embodiments, the processing module 810 is specifically configured to:
use a CPU with a lower interrupt load as the target CPU that responds to the first interrupt request.

In some embodiments, the apparatus 800 may further include a receiving module 820, configured to:
receive indication information sent by a CPU, where the indication information indicates that the CPU is incapable of processing an interrupt.

The processing module 810 is specifically configured to:
determine the target CPU from a CPU that is capable of responding to the first interrupt request and that is other than the CPU that sends the indication information.

In some embodiments, the first target interrupt running entity includes at least information that is related to interrupt running and that indicates an address space, and information about a general-purpose register including an interrupt number corresponding to the first interrupt request and a status register.

In some embodiments, the second target interrupt running entity includes at least information that is related to interrupt running and that indicates an address space, and information about a general-purpose register including an interrupt number corresponding to the second interrupt request and a status register.

An embodiment of this application further provides a chip. The chip includes a processor and a communication interface. The communication interface is configured to: receive a signal and transmit the signal to the processor. The processor processes the signal, so that the interrupt processing method according to any one of the foregoing possible implementations is performed.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and software. Whether a function is performed by hardware or hardware driven by software depends on particular applications and design constraint conditions of the technical solutions. A person skilled in the art may use different methods to implement the described functions for each particular application with reference to embodiments, but it should not be considered that the implementation goes beyond the scope of this application.

In embodiments, the electronic device may be divided into functional modules based on the foregoing method examples. For example, each functional module corresponding to each function may be obtained through division, or two or more functions may be integrated into one processing module. The integrated module may be implemented in a form of hardware. It should be noted that, in embodiments, division into the modules is an example, is merely logical function division, and may be other division in an actual implementation.

An embodiment further provides an interrupt processing apparatus, including modules configured to implement the interrupt processing method in the foregoing embodiments.

An embodiment further provides a readable storage medium. The readable storage medium stores instructions. When the instructions run on an electronic device, the electronic device is enabled to perform the foregoing related method steps to implement the interrupt processing method in the foregoing embodiments.

An embodiment further provides a program product. When the program product runs on an electronic device, the electronic device performs the foregoing related steps, to implement the interrupt processing method in the foregoing embodiments.

In addition, an embodiment of this application further provides an apparatus. The apparatus may be specifically a chip, a component, or a module, and the apparatus may include a processor and a memory that are connected. The memory is configured to store executable instructions. When the apparatus runs, the processor may execute the executable instructions stored in the memory, so that the chip performs the interrupt processing method in the foregoing method embodiments.

The interrupt processing apparatus, the electronic device, the readable storage medium, the program product, or the chip provided in embodiments is configured to perform the corresponding method provided above. Therefore, for beneficial effects that can be achieved, refer to the beneficial effects of the corresponding method provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An interrupt processing method, comprising:
when a first interrupt request is triggered, determining, by an electronic device, a target central processing unit CPU that responds to the first interrupt request;
determining, by the electronic device, a first target interrupt running entity in the target CPU;
scheduling, by the electronic device, a target thread from a user mode to a kernel mode;
replacing, by the electronic device, a running entity in the target thread with the first target interrupt running entity; and
scheduling, by the electronic device, the target thread comprising the first target interrupt running entity to the user mode, and running the first target interrupt running entity by using the target CPU.

2. The method according to claim 1, wherein the determining, by the electronic device, a first target interrupt running entity in the target CPU comprises:
determining the first target interrupt running entity in the target CPU based on a priority of the first interrupt request.

3. The method according to claim 2, wherein the method further comprises:
creating, by the electronic device, an interrupt running entity resource pool for the target CPU, wherein the interrupt running entity resource pool comprises a plurality of interrupt running entities, and the plurality of interrupt running entities have different priorities; and
the determining, by the electronic device, the first target interrupt running entity in the target CPU based on a priority of the first interrupt request comprises:
determining, by the electronic device, the first target interrupt running entity from the interrupt running entity resource pool based on the priority of the first interrupt request.

4. The method according to any one of claims 1 to 3, wherein before the replacing, by the electronic device, a running entity in the target thread with the first target interrupt running entity, the method further comprises:
storing, by the electronic device, the running entity in the target thread.

5. The method according to claim 2 or 3, wherein in a process in which the target CPU runs the first target interrupt running entity, the method further comprises:
when a second interrupt request is triggered, determining, by the electronic device, that a CPU that responds to the second interrupt request is the target CPU, wherein a priority of the second interrupt request is higher than the priority of the first interrupt request;
determining, by the electronic device, a second target interrupt running entity in the target CPU based on the priority of the second interrupt request, wherein a priority of the second target interrupt running entity is higher than a priority of the first target interrupt running entity;
scheduling, by the electronic device, the target thread from the user mode to the kernel mode;
replacing, by the electronic device, the first target interrupt running entity in the target thread with the second target interrupt running entity; and
scheduling, by the electronic device, the target thread comprising the second target interrupt running entity to the user mode, and running the second target interrupt running entity by using the target CPU.

6. The method according to claim 5, wherein before the replacing, by the electronic device, the first target interrupt running entity in the target thread with the second target interrupt running entity, the method further comprises:
storing, by the electronic device, the first target interrupt running entity.

7. The method according to claim 6, wherein after running of the second target interrupt running entity is completed, the method further comprises:
scheduling, by the electronic device, the target thread to the kernel mode;
replacing, by the electronic device, the second target interrupt running entity with the first target interrupt running entity; and
scheduling, by the electronic device, the target thread comprising the first target interrupt running entity to the user mode, and continuing to run the first target interrupt running entity by using the target CPU.

8. The method according to any one of claims 1 to 7, wherein after running of the first target interrupt running entity is completed, the method further comprises:
scheduling, by the electronic device, the target thread to the kernel mode;
replacing, by the electronic device, the first target interrupt running entity with the running entity; and
scheduling, by the electronic device, the target thread comprising the running entity to the user mode, and continuing to run the running entity by using the target CPU.

9. The method according to any one of claims 1 to 8, wherein the electronic device comprises a plurality of CPUs, and the determining, by the electronic device, a target CPU that responds to the first interrupt request comprises:
determining, by the electronic device based on interrupt load sizes of the plurality of CPUs, the target CPU that responds to the first interrupt request, wherein the first interrupt request is configured to be capable of being responded to by the target CPU.

10. The method according to claim 9, wherein the determining, by the electronic device based on interrupt load sizes of the CPUs, the target CPU that responds to the first interrupt request comprises:
using, by the electronic device, a CPU with a lower interrupt load as the target CPU that responds to the first interrupt request.

11. The method according to any one of claims 1 to 8, wherein the determining, by the electronic device, a target CPU that responds to the first interrupt request comprises:
receiving, by the electronic device, indication information sent by a CPU, wherein the indication information indicates that the CPU is incapable of processing an interrupt; and
determining, by the electronic device, the target CPU from a CPU that is capable of responding to the first interrupt request and that is other than the CPU that sends the indication information.

12. The method according to any one of claims 1 to 11, wherein the first target interrupt running entity comprises at least information that is related to interrupt running and that indicates an address space, and information about a general-purpose register comprising an interrupt number corresponding to the first interrupt request and a status register.

13. The method according to any one of claims 5 to 7, wherein the second target interrupt running entity comprises at least information that is related to interrupt running and that indicates an address space, and information about a general-purpose register comprising an interrupt number corresponding to the second interrupt request and a status register.

14. An interrupt processing apparatus, comprising:
a processing module, configured to:
when a first interrupt request is triggered, determine a target central processing unit CPU that responds to the first interrupt request;
determine a first target interrupt running entity in the target CPU;
schedule a target thread from a user mode to a kernel mode;
replace a running entity in the target thread with the first target interrupt running entity; and
schedule the target thread comprising the first target interrupt running entity to the user mode, and run the first target interrupt running entity by using the target CPU.

15. The apparatus according to claim 14, wherein the processing module is specifically configured to:
determine the first target interrupt running entity in the target CPU based on a priority of the first interrupt request.

16. The apparatus according to claim 15, wherein the processing module is further configured to:
create an interrupt running entity resource pool for the target CPU, wherein the interrupt running entity resource pool comprises a plurality of interrupt running entities, and the plurality of interrupt running entities have different priorities; and
the processing module is specifically configured to:
determine the first target interrupt running entity from the interrupt running entity resource pool based on the priority of the first interrupt request.

17. The apparatus according to any one of claims 14 to 16, wherein before the processing module replaces the running entity in the target thread with the first target interrupt running entity, the processing module is further configured to:
store the running entity in the target thread.

18. The apparatus according to claim 15 or 16, wherein in a process in which the target CPU runs the first target interrupt running entity,
the processing module is further configured to:
when a second interrupt request is triggered, determine that a CPU that responds to the second interrupt request is the target CPU, wherein a priority of the second interrupt request is higher than the priority of the first interrupt request;
determine a second target interrupt running entity in the target CPU based on the priority of the second interrupt request, wherein a priority of the second target interrupt running entity is higher than a priority of the first target interrupt running entity;
schedule the target thread from the user mode to the kernel mode;
replace the first target interrupt running entity in the target thread with the second target interrupt running entity; and
schedule the target thread comprising the second target interrupt running entity to the user mode, and run the second target interrupt running entity by using the target CPU.

19. The apparatus according to claim 18, wherein before the processing module replaces the first target interrupt running entity in the target thread with the second target interrupt running entity, the processing module is further configured to:
store the first target interrupt running entity.

20. The apparatus according to claim 19, wherein after running of the second target interrupt running entity is completed, the processing module is further configured to:
schedule the target thread to the kernel mode;
replace the second target interrupt running entity with the first target interrupt running entity; and
schedule the target thread comprising the first target interrupt running entity to the user mode, and continue to run the first target interrupt running entity by using the target CPU.

21. The apparatus according to any one of claims 14 to 20, wherein after running of the first target interrupt running entity is completed, the processing module is further configured to:
schedule the target thread to the kernel mode;
replace the first target interrupt running entity with the running entity; and
schedule the target thread comprising the running entity to the user mode, and continue to run the running entity by using the target CPU.

22. The apparatus according to any one of claims 14 to 21, wherein the apparatus comprises a plurality of CPUs, and the processing module is specifically configured to:
determine, based on interrupt load sizes of the plurality of CPUs, the target CPU that responds to the first interrupt request, wherein the first interrupt request is configured to be capable of being responded to by the target CPU.

23. The apparatus according to claim 22, wherein the processing module is specifically configured to:
use a CPU with a lower interrupt load as the target CPU that responds to the first interrupt request.

24. The apparatus according to any one of claims 14 to 21, wherein the apparatus further comprises a receiving module, and the receiving module is configured to receive indication information sent by a CPU, wherein the indication information indicates that the CPU is incapable of processing an interrupt; and
the processing module is specifically configured to:
determine the target CPU from a CPU that is capable of responding to the first interrupt request and that is other than the CPU that sends the indication information.

25. The apparatus according to any one of claims 14 to 24, wherein the first target interrupt running entity comprises at least information that is related to interrupt running and that indicates an address space, and information about a general-purpose register comprising an interrupt number corresponding to the first interrupt request and a status register.

26. The apparatus according to any one of claims 18 to 20, wherein the second target interrupt running entity comprises at least information that is related to interrupt running and that indicates an address space, and information about a general-purpose register comprising an interrupt number corresponding to the second interrupt request and a status register.

27. An electronic device, comprising one or more processors and one or more memories, wherein the one or more memories store one or more programs, and when the one or more programs are executed by the one or more processors, the interrupt processing method according to any one of claims 1 to 13 is performed.

28. A chip, wherein the chip comprises a processor and a communication interface, the communication interface is configured to: receive a signal, and transmit the signal to the processor, and the processor processes the signal, so that the interrupt processing method according to any one of claims 1 to 13 is performed.

29. A readable storage medium, wherein the readable storage medium stores instructions, and when the instructions run on a device, the interrupt processing method according to any one of claims 1 to 13 is performed.
